(19) 

**Europäisches Patentamt**
**European Patent Office**
**Office européen des brevets**

(11) **EP 4 603 807 A1**

(12) **EUROPEAN PATENT APPLICATION**

(43) Date of publication:
**20.08.2025 Bulletin 2025/34**

(21) Application number: **24158153.7**

(22) Date of filing: **16.02.2024**

(51) International Patent Classification (IPC):
*G01J 3/02* (2006.01)  *G01J 3/08* (2006.01)
*G01J 3/28* (2006.01)  *G01J 3/42* (2006.01)
*G02F 1/19* (2019.01)  *G02F 1/29* (2006.01)

(52) Cooperative Patent Classification (CPC):
**G01J 3/0205; G01J 3/021; G01J 3/0272;**
**G01J 3/0297; G01J 3/08; G01J 3/28; G01J 3/42;**
**G02F 1/0147; G02F 1/29**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **trinamiX GmbH**
**67063 Ludwigshafen am Rhein (DE)**

(72) Inventor: **Laubscher, Moritz**
**67059 Ludwigshafen am Rhein (DE)**

(74) Representative: **Altmann Stößel Dick**
**Patentanwälte PartG mbB**
**Theodor-Heuss-Anlage 2**
**68165 Mannheim (DE)**

(54) **PHASE CHANGE MATERIAL AS SWITCHABLE OPTICAL ELEMENT**

(57)    The present invention relates to a spectrometer device (110) for obtaining at least one item of spectroscopic information on at least one object (112) by spectroscopic measurement, the spectrometer device (110) comprising:
(1) at least one light emitting element (114), wherein the light emitting element (114) is configured for emitting illumination light (116) for illuminating the at least one object (112) in order to generate detection light (118) from the at least one object (112);
(2) at least one detector (120), wherein the detector (120) is configured for generating at least one detector (120) signal when receiving the detection light (118) from the object (112) in order to acquire the item of spectroscopic information;
(3) at least one transfer element (122), wherein the transfer element (122) comprises a phase-change material having at least two different optical properties depending on the phase of the phase-change material, wherein the transfer element (122) is disposed in at least one of: a beam path of the illumination light (116) and a beam path of the detection light (118); and
(4) at least one switching element (124), wherein the switching element (124) is configured for setting the phase of the phase-change material in order to adjust the optical properties of the phase-change material.

FIG.3

## Description

Technical Field

The invention relates to a spectrometer device. The invention further relates to a mobile communication device and a method for operating a spectrometer device. Such measurement devices can, in general, be used for investigating or monitoring purposes, in particular, in the infrared (IR) spectral region, especially in the near-infrared (NIR) spectral region, and in the visible (VIS) spectral region, e.g. in a spectral region allowing to mimic a human's ability of color sight. However, further applications are feasible.

Background art

Spectrometer devices are, typically, used for obtaining spectroscopic information on an object. Such spectrometer device may comprise switchable transfer elements having at least two modes of operation that are configured for influencing, shaping and/or forming the optical path of illumination light and/or detection light in a different manner.

Such switchable elements may have significant limitations. In general, switchable transfer elements are expensive and/or complex optical components. Consequently, they may only be used in advanced spectrometer devices. Further, the switchable transfer elements may have significant limitations, e.g. size constrains. Typically, switchable transfer elements may comprise liquid crystals configured for setting an operation mode of the switchable transfer elements. Such liquid crystals may require to be encapsulated and, typically, rely of the light polarization for switching the operation mode, which may result in a high loss of optical power, e.g. a 50% loss.

Problem to be solved

It is therefore desirable to provide devices, which at least partially address the above-mentioned technical challenges and at least substantially avoid the disadvantages of known devices.

In particular, it is an object of the present invention to enable a spectrometer device to comprise an advanced switchable transfer elements that is cost efficient, reliable, compact, flexible and does not require moveable components.

Summary

This problem is addressed by the spectrometer device, the mobile communication device and the method for operating the spectrometer device, which are described by the features of the independent claims. Advantageous embodiments which might be realized in an isolated fashion or in any arbitrary combinations are listed in the dependent claims as well as throughout the specification.

In a first aspect, a spectrometer device for obtaining at least one item of spectroscopic information on at least one object by spectroscopic measurement is disclosed.

The term "spectrometer device" as used herein is a broad term and is to be given its ordinary and customary meaning to a person of ordinary skill in the art and is not to be limited to a special or customized meaning. The term specifically may refer, without limitation, to an optical device configured for acquiring at least one item of spectral information on at least one object. Specifically, the at least one item of spectral information may refer to at least one optical property or optically measurable property which is determined as a function of a wavelength, for one or more different wavelengths. More specifically, the optical property or optically measurable property, as well as the at least one item of spectral information, may relate to at least one property characterizing at least one of a transmission, an absorption, a reflection and an emission of the at least one object, either by itself or after illumination with external light. The at least one optical property may be determined for one or more wavelengths. The spectrometer device specifically may form an apparatus which is capable of recording a signal intensity with respect to the corresponding wavelength of a spectrum or a partition thereof, such as a wavelength interval, wherein the signal intensity may, specifically, be provided as an electrical signal which may be used for further evaluation.

The term "spectral information", also referred to as "spectral information" or as "an item of spectral information", as used herein is a broad term and is to be given its ordinary and customary meaning to a person of ordinary skill in the art and is not to be limited to a special or customized meaning. The term specifically may refer, without limitation, to an item of information, e.g. on at least one object and/or radiation emitted by at least one object, characterizing at least one optical property of the object, more specifically at least one item of information characterizing, e.g. qualifying and/or quantifying, at least one of a transmission, an absorption, a reflection and an emission of the at least one object. As an example, the at least one item of spectral information may comprise at least one intensity information, e.g. information on an intensity of light being at least one of transmitted, absorbed, reflected or emitted by the object, e.g. as a function of a wavelength or wavelength sub-range over one or more wavelengths, e.g. over a range of wavelengths. Specifically, the intensity information may correspond to or be derived from the signal intensity, specifically the electrical signal, recorded by the spectrometer device with respect to a wavelength or a range of wavelengths of the spectrum.

The spectrometer device comprises:

(1) at least one light emitting element, wherein the light emitting element is configured for emitting illumination light for illuminating the at least one object in order to generate detection light from the at least one object; and

(2) at least one detector, wherein the detector is configured for generating at least one detector signal when receiving the detection light from the object in order to obtain the item of spectroscopic information;

(3) at least one transfer element, wherein the transfer element comprises a phase-change material having at least two different optical properties depending on the phase of the phase-change material, wherein the transfer element is disposed in at least one of: a beam path of the illumination light and a beam path of the detection light; and

(4) at least one switching element, wherein the switching element is configured for setting the phase of the phase-change material in order to adjust the optical properties of the phase-change material.

As already stated in the above, the spectrometer device comprises at least one light emitting element, wherein the light emitting element is configured for emitting illumination light for illuminating the at least one object in order to generate detection light from the at least one object.

As further used herein, the term "light" as used herein is a broad term and is to be given its ordinary and customary meaning to a person of ordinary skill in the art and is not to be limited to a special or customized meaning. The term specifically may refer, without limitation, to electromagnetic radiation in one or more of the infrared, the visible and the ultraviolet spectral range. Herein, the term "ultraviolet spectral range", generally, refers to electromagnetic radiation having a wavelength of 1 nm to 380 nm, preferably of 100 nm to 380 nm. Further, in partial accordance with standard ISO-21348 in a valid version at the date of this document, the term "visible spectral range", generally, refers to a spectral range of 380 nm to 760 nm. The term "infrared spectral range" (IR) generally refers to electromagnetic radiation of 760 nm to 1000 $\mu$m, wherein the range of 760 nm to 1.5 $\mu$m is usually denominated as "near infrared spectral range" (NIR) while the range from 1.5 $\mu$ to 15 $\mu$m is denoted as "mid infrared spectral range" (MidIR) and the range from 15 $\mu$m to 1000 $\mu$m as "far infrared spectral range" (FIR). Preferably, light used for the typical purposes of the present invention is light in the infrared (IR) spectral range, more preferred, in the near infrared (NIR) and/or the mid infrared spectral range (MidIR), especially the light having a wavelength of 1 $\mu$m to 5 $\mu$m, preferably of 1 $\mu$m to 3 $\mu$m. This is due to the fact that many material properties or properties on the chemical constitution of many objects may be derived from the near infrared spectral range. It shall be noted, however, that spectroscopy in other spectral ranges is also feasible and within the scope of the present invention.

Consequently, the term "light emitting element", also referred to as an "illumination source", as used herein is a broad term and is to be given its ordinary and customary meaning to a person of ordinary skill in the art and is not to be limited to a special or customized meaning. The term specifically may refer, without limitation, to an arbitrary device configured for generating or providing light, specifically "illumination light" in the sense of the above-mentioned definition for the term "light". The light emitting element specifically may be or may comprise at least one electrical light source.

As further used herein, the term "detection light" as used herein is a broad term and is to be given its ordinary and customary meaning to a person of ordinary skill in the art and is not to be limited to a special or customized meaning. The term specifically may refer, without limitation, to light that is "generated" by the object, particularly generated in an interaction of the illumination light with the object, such as scattering, reflecting and/or transmitting. Interacting may include a process of absorbing at least a portion of the illumination light. The detection light may be illumination light that is reflected and/or scattered back through the sample interface to the at least one detector. At least a portion of the illumination light may be transmitted and/or absorbed by the object in a manner that it is not detected by the at least one detector.

The light emitting element may be a thermal radiator. The thermal radiator may be selected from an incandescent lamp or a thermal infrared emitter. The term "incandescent lamp" as used herein is a broad term and is to be given its ordinary and customary meaning to a person of ordinary skill in the art and is not to be limited to a special or customized meaning. The term specifically may refer, without limitation, to an electric light having a heatable element, such as a wire filament heated, which is capable of being heated to a temperature at which it emits light, especially infrared light. Since the incandescent lamp can, therefore, be considered as a thermal emitter within the infrared spectral range, an emission power of the incandescent lamp decreases with increasing wavelength. The thermal radiator may be selected from an incandescent lamp or a thermal infrared emitter. The term "thermal infrared emitter" as used herein is a broad term and is to be given its ordinary and customary meaning to a person of ordinary skill in the art and is not to be limited to a special or customized meaning. The term specifically may refer, without limitation, to a micro-machined thermally emitting device, which comprises a radiation emitting surface as the light emitting element that emits the optical radiation to be monitored.

Alternatively or in addition, the light emitting element may be a laser, specifically a vertical cavity surface emitting laser (VCSEL), particularly emitting at least one wavelength in the infrared region.

The term "vertical-cavity surface-emitting laser" as used herein is a broad term and is to be given its ordinary and customary meaning to a person of ordinary skill in the art and is not to be limited to a special or customized meaning. The term specifically may refer, without limitation, to a semiconductor laser diode configured for laser beam emission perpendicular with respect to a top surface. VCSELs are generally known to the skilled person such as from WO 2017/222618 A.

Alternatively or in addition, the radiation emitting element may be a light-emitting diode (LED), specifically a LED emitting light that is at least partially located in the infrared spectral range. Alternatively or in addition, a LED emitting light that is illuminating a luminescent material, specifically a phosphor, for light-conversion of light generated by the LED, wherein the luminescent material generates converted light that is at least partly located in the near-infrared spectral range.

The term "light-emitting diode" or briefly "LED", as used herein, is a broad term and is to be given its ordinary and customary meaning to a person of ordinary skill in the art and is not to be limited to a special or customized meaning. The term specifically may refer, without limitation, to an optoelectronic semiconductor device capable of emitting light when an electrical current flows through the device. The optoelectronic semiconductor device may be configured for generating the light due to various physical processes, including one or more of spontaneous emission, induced emission, decay of metastable excited states and the like. Thus, as an example, the light-emitting diode, may comprise one or more of: a light-emitting diode based on spontaneous emission of light, in particular an organic light emitting diode, a light-emitting diode based on superluminescence (sLED), or a laser diode (LD) In the following, without narrowing the possible embodiments of the light-emitting diode to any of the before-mentioned physical principles or setups, the abbreviation "LED" will be used for any type of light-emitting diode.

Specifically, the LED may comprise at least two layers of semiconductor material, wherein light may be generated at at least one interface between the at least two layers of semiconductor material, specifically due to a recombination of positive and negative electrical charges, e.g. due to electron-hole recombination. The at least two layers of semiconductor material may have differing electrical properties, such as at least one of the layers being an n-doped semiconductor material and at least one of the layers being a p-doped semiconductor material. Thus, as an example, the LED may comprise at least one pn-junction and/or at least one pin-set up. It shall be noted, however, that other device structures are feasible, too. The at least one semiconductor material may specifically be or may comprise at least one inorganic semiconducting material. It shall be noted, however, that organic semiconducting materials may be used additionally or alternatively.

Generally, the LED may convert electrical current into light, specifically light that is at least partially located in the infrared spectral range. Alternatively or in addition, LED may convert electrical current into light into primary light, more specifically into blue primary light. The LED, thus, specifically may be a blue LED. The LED may be configured for generating the primary light, particularly for the light-conversion in the phosphor, also referred to as the "pump light". Thus, the LED may also be referred to as the "pump LED". The LED specifically may comprise at least one LED chip and/or at least one LED die. Thus, the semiconductor element of the LED may comprise an LED bare chip.

The term "luminescence" as used herein is a broad term and is to be given its ordinary and customary meaning to a person of ordinary skill in the art and is not to be limited to a special or customized meaning. The term specifically may refer, without limitation, to the process of spontaneous emission of light by a substance not resulting from heat. Specifically, luminescence may refer to a cold-body radiation. More specifically, the luminescence may be initiated or excited by irradiation of light, in which case the luminescence is also referred to as "photoluminescence". The property of a material being capable of performing luminescence, in the context of the present invention, is referred to by the adjective "luminescent". The at least one luminescent material specifically may be a photoluminescent material, i.e. a material which is capable of emitting light after absorption of photons or excitation light. Specifically, the luminescent material may have a positive Stokes shift, which generally may refer to the fact that the secondary light is red-shifted with respect to the primary light.

The at least one luminescent material, thus, may form at least one converter, also referred to as a light converter, transforming primary light into secondary light having different spectral properties as compared to the primary light. Specifically, a spectral width of the secondary light may be larger than a spectral width of the primary light, and/or a center of emission of the secondary light may be shifted, specifically red-shifted, compared to the primary light. Specifically, the at least one luminescent material may have an absorption in the ultraviolet and/or blue spectral range and an emission in the near-infrared and/or infrared spectral range. Thus, generally, the luminescent material or converter may form at least one component of the phosphor LED converging primary light or pump light, specifically in the blue spectral range, into light having a longer wavelength, e.g. in the near-infrared or infrared spectral range.

The luminescent material, specifically, may, thus, form at least one converter or light converter. The luminescent material may form at least one of a converter platelet, a luminescent and specifically a fluorescent coating on the LED and phosphor coating on the LED. The luminescent material may, as an example, comprise one or more of the following materials: Cerium-doped YAG (YAG:$Ce^{3+}$, or $Y_3Al_5O_{12}$:$Ce^{3+}$); rare-earth-doped Sialons; copper- and aluminium-doped zinc sulfide (ZnS:Cu,Al).

The LED and the luminescent material, together, may form a so-called "phosphor LED". Consequently, the term "phosphor light-emitting diode" or briefly "phosphor LED", as used herein, is a broad term and is to be given its ordinary and customary meaning to a person of ordinary skill in the art and is not to be limited to a special or customized meaning. The term specifically may refer, without limitation, to a combination of at least one light-emitting diode configured for generating primary light or pump light, and at least one luminescent material, also referred to as a "phosphor", configured for light-conversion of the primary light generated by the light-emitting diode. The phosphor LED may form a packaged LED light source, including the LED die, e.g. a blue LED emitting blue pump light, as well as the phosphor, which, as an example, fully or partially coats the LED, which is, as an example, configured for converting the primary light or blue light into light having differing spectral properties, specifically into near-infrared light. Generally, the phosphor LED may be packaged in one housing or may be unpackaged. Thus, the LED and the at least one luminescent material for light-conversion of the primary light generated by the light-emitting diode may specifically be housed in a common housing. Alternatively, however, the LED may also be an unhoused or bare LED which may fully or partially be covered with the luminescent material, such as by disposing one or more layers of the luminescent material on the LED die. The phosphor LED, generally, may form an emitter or light source by itself.

The at least one luminescent material specifically may form at least one layer. Generally, various alternatives of positioning the luminescent material with respect to the light-emitting diode are feasible, alone or in combination. Firstly, the luminescent material, e.g., at least one layer of the luminescent material, such as the phosphor, may be positioned directly on the light-emitting diode, which is also referred to as a "direct attach", e.g. with no material in between the LED and the luminescent material or with one or more transparent materials in between, such as with one or more transparent materials, specifically transparent for the primary light, in between the LED and the luminescent material. Thus, as an example, a coating of the luminescent material may be placed directly or indirectly on the LED. Additionally or alternatively, the luminescent material, as an example, may form at least one converter body, such as at least one converter disk, which may be placed on top of the LED, e.g. by adhesive attachment of the converter body to the LED. Additionally or alternatively, the luminescent material may also be placed in a remote fashion, such that the primary light from the LED has to pass an intermediate optical path before reaching the luminescent material. This placement may also be referred to as a "remote placement" or as a "remote phosphor". Again, as an example, the luminescent material in the remote placement may form a solid body or converter body, such as a disk or converter disk. Further, in case of the remote placement, the luminescent material may also be a coating. In particular, an object which is transmitting light, e.g. a thin glass substrate, module window, comprising and/or being made of glass or plastics, may be coated with the phosphor. Alternatively, a reflective surface may be coated with the phosphor. This could be a flat or rough mirror, which may comprise and/or be made of a high-reflective index material substrate, e.g. silicon, or a gold, silver, aluminum or chromium coated flat or rough surface, e.g. glass, or a plastic. In the intermediate optical path, one or more optical elements may be placed, such as one or more of a lens, a prism, a grating, a mirror, an aperture or a combination thereof. Thus, specifically, an optical system having imaging properties may be placed in between the LED and the luminescent material, in the intermediate optical path. Thereby, as an example, the primary light may be focused, or bundled onto the converter body.

The light emitting element may be emitting infrared radiation.

As already stated in the above, the spectrometer device comprises at least one detector, wherein the detector is configured for generating at least one detector signal when receiving the detection light from the object in order to obtain the item of spectroscopic information.

The verb "to detect" as used herein is a broad term and is to be given its ordinary and customary meaning to a person of ordinary skill in the art and is not to be limited to a special or customized meaning. The term specifically may refer, without limitation, to the process of at least one of determining, measuring and monitoring at least one parameter, qualitatively and/or quantitatively, such as at least one of a physical parameter, a chemical parameter and a biological parameter. Specifically, the physical parameter may be or may comprise an electrical parameter. Consequently, the term "photosensitive detector", or "detector" as used herein is a broad term and is to be given its ordinary and customary meaning to a person of ordinary skill in the art and is not to be limited to a special or customized meaning. The term specifically may refer, without limitation, to an arbitrary device configured for detecting, i.e. for at least one of determining, measuring and monitoring, at least one parameter, qualitatively and/or quantitatively, such as at least one of a physical parameter, a chemical parameter and a biological parameter. The at least one detector may be configured for generating at least one detector signal, more specifically at least one electrical detector signal, such as an analogue and/or a digital detector signal, the detector signal providing information on the at least one parameter measured by the detector. The detector signal may directly or indirectly be provided by the at least one detector to the evaluation unit, such that the at least one detector and the evaluation unit may be directly or indirectly connected. The detector signals may be used as a "raw" detector signal and/or may be processed or preprocessed before further used, e.g. by filtering and the like. Thus, the at least one detector may comprise at least one processing device and/or at least one preprocessing device, such as at least one of an amplifier, an analogue/digital converter, an electrical filter and a Fourier transformation.

The at least one detector may be configured for detecting light propagating from the object to the spectrometer device or more specifically to the at least one detector of the spectrometer device. The at least one detector may be configured for determining at least one optical parameter, such as an intensity and/or a power of light by which at least one sensitive area of the detector is irradiated. More specifically, the at least one detector may comprise at least one photosensitive element and/or at least one optical sensor, such as at least one of a photodiode, a photocell, a photosensitive resistor, a phototransistor, a thermopile sensor, a photoacoustic sensor, a pyroelectric sensor, a photomultiplier and a bolometer. The at least one detector, thus, may be configured for generating at least one detector signal, more specifically at least one electrical detector signal, in the above-mentioned sense, providing information on at least one optical parameter, such as the power and/or intensity of light by which the detector or a sensitive area of the detector is illuminated.

The one or more detectors may comprise a plurality of photosensitive elements sensitive to differing wavelength intervals. Each of the photosensitive elements may comprise at least a photosensitive area which may be adapted for generating an electrical signal depending on the intensity of the incident light, wherein the electrical signal may, in particular, be provided to the evaluation unit, as will be outlined in further detail below.

The photosensitive area as comprised by each of the optically sensitive photosensitive detectors may, especially, be a single, uniform photosensitive area which is configured for receiving the incident light which impinges on the individual optically sensitive elements. However, other arrangements of the optically sensitive elements may also be conceivable.

The spectrometer device may further comprise at least one wavelength-selective element, wherein the wavelength-selective element is disposed in at least one of:

- a beam path of the illumination light; and
- a beam path of the detection light.

The at least one the wavelength-selective element may be configured and/or arranged in a manner that at least two photosensitive elements of the plurality of photosensitive elements are exposed to an individual spectral range of detection light from the object.

As used herein, the term "wavelength-selective element" is a broad term and is to be given its ordinary and customary meaning to a person of ordinary skill in the art and is not to be limited to a special or customized meaning. The term specifically may refer, without limitation, to an arbitrary optical element which interacts with differing spectral portions of incident light in a different manner, e.g. by having at least one wavelength-dependent optical property, such as at least one wavelength-dependent optical property selected from the list consisting of a degree of reflection, a direction of reflection, a degree of refraction, a direction of refraction, an absorption, a transmission, an index of refraction.

The wavelength-selective element may be configured such that each of the photosensitive detectors may be exposed to the same spectral range of the detection light. The wavelength-selective element may be selected from the group of a tunable wavelength-selective element and a wavelength-selective element having a fixed transmission spectrum. By using a tunable wavelength selective element, as an example, differing wavelength ranges may be selected sequentially, whereas, by using a wavelength-selective element having a fixed transmission spectrum, the selection of the wavelength ranges may be fixed and may, however, be dependent e.g. on a detection position, thereby allowing, as an example, in the detection light beam path, for simultaneously exposing different detectors and/or different photosensitive detectors of the detector to differing spectral ranges of light.

Thus the at least one wavelength-selective element may comprise at least one of a filter, a grating, a prism, a plasmonic filter, a diffractive optical element and a metamaterial. More specifically, the spectrometer device may comprise at least one wavelength-selective element disposed in a beam path of the light from the object, i.e. in the beam path of the detection light, wherein the wavelength-selective element, specifically may be configured such that each of the photosensitive detectors is exposed to an individual spectral range of the light from the object. As an example, a variable wavelength-selective element may be used, the transmission of which depends on a position on the wavelength-selective element, such that, when the variable wavelength-selective element is placed on top of the array of photosensitive detectors, the individual photosensitive detectors are exposed to differing spectral ranges of the incident light, specifically the detection light from the object. Additionally or alternatively the at least one wavelength-selective element may comprise at least one of the following elements: an array of individual bandpass filters, an array of patterned filters, an MEMS-Interferometer, an MEMS-Fabry Perot interferometer. Further elements are feasible.

The spectrometer device may comprise at least one evaluation unit configured for evaluating the detector signal in order to obtain the item of spectroscopic information.

The term "to evaluate", as used herein, is a broad term and is to be given its ordinary and customary meaning to a person of ordinary skill in the art and is not to be limited to a special or customized meaning. The term specifically may refer, without limitation, to the process of processing at least one first item of information in order to generate at least one second item of information thereby. Consequently, the term "evaluation unit", as used herein, is a broad term and is to be given its ordinary and customary meaning to a person of ordinary skill in the art and is not to be limited to a special or customized meaning. The term specifically may refer, without limitation, to an arbitrary device or a combination of devices configured to evaluate or process at least one first item of information, in order to generate at least one second item of information thereof. Thus, specifically, the evaluation unit may be configured for processing at least one input signal and to generate at least one output signal thereof. The at least one input signal, as an example, may comprise at least one detector signal provided directly or indirectly by the at least one photosensitive detector.

As an example, the evaluation unit may be or may comprise one or more integrated circuits, such as one or more application-specific integrated circuits (ASICs), and/or one or more data processing devices, such as one or more of computers, digital signal processors (DSP), field programmable gate arrays (FPGA) preferably one or more microcomputers and/or microcontrollers. Additional components may be comprised, such as one or more preprocessing devices and/or data acquisition devices, such as one or more devices for receiving and/or preprocessing of the detector signals, such as one or more AD-converters and/or one or more filters. Further, the evaluation unit may comprise one or more data storage devices. Further, the evaluation unit may comprise one or more interfaces, such as one or more wireless interfaces and/or one or more wire-bound interfaces.

As already stated in the above, the spectrometer device comprises at least one transfer element, wherein the transfer element comprises a phase-change material having at least two different optical properties depending on the phase of the phase-change material, wherein the transfer element is disposed in at least one of: a beam path of the illumination light and a beam path of the detection light.

The term "transfer" may refer to light that is transferred, particularly by the transfer element, such as by being transferred in a process of scattering, reflecting and/or transmitting. Exemplarily, light that is incident on the transfer element may have a first optical property and the light that is transferred by the transfer element may have a second optical property. The second optical property may be generated in an interaction of the light that is incident on the transfer element with the transfer element, such as scattering, reflecting and/or transmitting.

The term "transfer element" as used herein is a broad term and is to be given its ordinary and customary meaning to a person of ordinary skill in the art and is not to be limited to a special or customized meaning. The term specifically may refer, without limitation, to an arbitrary optical element configured for interacting with light. Thereby, at least one of may be manipulated: a beam path of the light that is transferred and/or reflected and/or scattered by the transfer element, particularly depending on a wavelength range of the light; an intensity of the light that is transferred and/or reflected and/or scattered by the transfer element, particularly depending on a wavelength range of the light.

The transfer element may be configured for interacting with light that is incident on the transfer element in a manner that light that is transferred by the transfer element is generated, particularly such that the light that is transferred by the transfer element is generated from the light that is incident on the transfer element. Generating may include scattering, absorbing, reflecting and/or transmitting incident light on the transfer element. Thus, the light that is transferred by the transfer element may be generated in a scattering, reflecting and/or transmitting process of the light that is incident on the transfer element and the transfer element. Interacting with the light that is incident on the transfer element may further include a process of absorbing, particularly absorbing of at least a portion or any of the light that is incident on the transfer element. Particularly consequently, the specific light that is transferred may have at least one optical property that is defined by the transfer element.

The transfer element is disposed in at least one of: a beam path of the illumination light and a beam path of the detection light. Thereby, at least a portion and/or any of the illumination light may be transferred by the transfer element. Alternatively or in addition, at least a portion and/or any of the detection light may be transferred by the transfer element.

The term "phase-change material" as used herein is a broad term and is to be given its ordinary and customary meaning to a person of ordinary skill in the art and is not to be limited to a special or customized meaning. The term specifically may refer, without limitation, to a substance and/or matter configured for performing a reversible change of its phase . The change of the phase may be between a first and a second physical state. The change of the physical state may, typically, be driven by a change and/or gradient of the change of the temperature of the substance. Alternatively or in addition, the change of the physical state may be driven by a change of at least one electromagnetic field at least partially surrounding the material and/or by a change of at least one pressure applied to the material.

The term "phase" as used herein is a broad term and is to be given its ordinary and customary meaning to a person of ordinary skill in the art and is not to be limited to a special or customized meaning. The term specifically may refer, without limitation, to a specific form and/or organization of constituent particles of a substance and/or a matter, specifically at least one of: atoms; molecules; ions, in which a substance and/or a matter can exist. In a specific phase the substance and/or the matter, such as the phase-change material, may show a specific optical property.

The first and the second physical state may be two different physical states selected from

- a crystalline state,
- a further crystalline state,
- an amorphous state,
- a liquid state.

The term "crystalline state" as used herein is a broad term and is to be given its ordinary and customary meaning to a person of ordinary skill in the art and is not to be limited to a special or customized meaning. The term specifically may refer, without limitation, to a physical state, or phase, of matter in which a plurality of constituent particles of the matter, specifically at least one of: atoms; molecules; ions, are arranged in an ordered pattern and/or a repeating pattern, such as a crystal lattice. In the crystalline state, the plurality of constituent particles may be arranged at fixed positions relative to each other, thereby, particularly forming a rigid and defined structure. The crystalline state may be selected from at least one of: a hexagonal state, a face-centered cubic state, at least one of the following crystal families: Triclinic, Monoclinic, Orthorhombic, Tetragonal, Hexagonal, Cubic. The term "further" may indicate that the crystalline state and the further crystalline state may be different phases.

The term "amorphous state" as used herein is a broad term and is to be given its ordinary and customary meaning to a person of ordinary skill in the art and is not to be limited to a special or customized meaning. The term specifically may refer, without limitation, to a physical state, or phase, of matter in which the constituent particles of the matter, specifically at least one of: atoms; molecules; ions, are arranged in interconnected structural blocks. Such interconnected structural blocks may be similar to the basic structural units found in a corresponding crystalline phase of the same matter. Unlike in crystalline materials no long-range order may exist in an amorphous state.

The term "liquid state" as used herein is a broad term and is to be given its ordinary and customary meaning to a person of ordinary skill in the art and is not to be limited to a special or customized meaning. The term specifically may refer, without limitation, to a physical state, or phase, in which the constituents, typically molecules, are connected together by intermolecular bonds. In the liquid state a substance may be able to flow and/or take the shape of a container. Unlike in a gas state, a substance maintains a constant density in the liquid phase.

The phase-change material may be germanium-antimony-tellurium, GAT. Alternatively or in addition, the phase-change material may be silver-indium-antimony-tellurium, AIST. Alternatively or in addition, the phase-change material may be vanadium-dioxide, $VO_2$. Alternatively or in addition, the phase-change material may be germanium-antimony-selenium-tellurium, GST.

The term "optical property" as used herein is a broad term and is to be given its ordinary and customary meaning to a person of ordinary skill in the art and is not to be limited to a special or customized meaning. The term specifically may refer, without limitation, to a measure and/or a degree of how a substance and/or a material interacts with light, specifically by absorption, scattering, reflection and/or transmission of light incident on the substance and/or material. Typically, an optical property may be wavelength dependent, particularly in a manner that for a plurality of different wavelengths a specific optical property is available for each wavelength. The optical property may be different for different wavelengths. Particularly consequently, the at least two different optical properties depending on the phase of the phase-change material may be wavelength dependent.

The phase-change material may show a first optical property of the at least two different optical properties, when the phase-change material assumes a first physical state. The phase-change material may show a second optical property of the at least two different optical properties, when the phase-change material assumes a second physical state.

The spectrometer device further may comprise a reference target, particularly configured for calibrating the spectrometer device. For being configured for calibrating the spectrometer device, the reference target may be deposited in a beam path of the illumination light and generate reference light that is directed and/or detected by the detector. The transfer element may be arranged in a beam path of the illumination light from the light emitting element to the reference target, particularly in a manner that the reference target may be illuminated by the illumination light depending on the at least two different optical properties of the transfer element.

The term "reference target" as used herein is a broad term and is to be given its ordinary and customary meaning to a person of ordinary skill in the art and is not to be limited to a special or customized meaning. The term specifically may refer, without limitation, to at least one element having known optical characteristics. Thereby, the reference target may be used in a process of calibrating the spectrometer device.

For calibrating the spectrometer device, a light emitting element, such as the light emitting element used in the spectroscopic measurements, may be emitting illumination light in order to illuminate the reference target. The illumination light may interact with reference target and, thereby, generate "reference light". The reference light may be detected by a detector, such as the detector used for the spectroscopic measurements. The detector may detect the reference light and, thereby generate a detector signal. The detector signal may be evaluated by using the evaluation unit. Thereby, an item of spectral information may be generated. The item of spectral information may be compared to a known item of spectral reference information, particularly associated with the known optical characteristics of the reference target. Thereby, an item of calibration information may be obtained, particularly wherein the item of calibration information compensates a deviation between the item of spectral information and the known item of spectral reference information. In a further evaluation of a detector signal, particularly performed in order to obtain an item of spectral information on a measurement object, the item of calibration information may be considered, particularly for correcting at least indirectly the detector signal and/or the item of spectral information.

Particularly as a result of illuminating the reference target by the illumination light depending on the at least two different optical properties of the transfer element, the intensity of the light impinging on the reference target may be different for the at least two different optical properties.

The at least two different optical properties may be or may comprise at least two different absorption coefficients. The term "absorption coefficient" as used herein is a broad term and is to be given its ordinary and customary meaning to a person of ordinary skill in the art and is not to be limited to a special or customized meaning. The term specifically may refer, without limitation, to a degree and/or measure of the capability of a material to absorb light, particularly at a specific wavelength and/or a specific range of wavelengths. Absorption coefficients may be, typically, given in units of reciprocal length, such as $cm^{-1}$. The absorption coefficient of the phase-change material being in the first physical state may be smaller than the absorption coefficient of the phase-change material being in the second physical state.

The transfer element may be a switchable absorber, particularly having a switchable absorption coefficient depending on the phase of the phase-change material. The term "switchable" as used herein is a broad term and is to be given its ordinary and customary meaning to a person of ordinary skill in the art and is not to be limited to a special or customized meaning. The term specifically may refer, without limitation, to a characteristic that is changeable, particularly reversibly changeable, from a state to further state. The term may indicate that the transfer element comprising the phase-change material may actively, such as by using the switching element, be switched and/or changed from a physical state to a further physical state, particularly whereby a respective optical property may be changed. The term "absorber" as used herein is a broad term and is to be given its ordinary and customary meaning to a person of ordinary skill in the art and is not to be limited to a special or customized meaning. The term specifically may refer, without limitation, to an arbitrary optical element having an absorption coefficient of above $10^4$ $cm^{-1}$ or $10^4$ $cm^{-1}$, particularly in at least one physical state of the phase-change material.

The switchable absorber may absorb at least one of: the illumination light, the detection light depending on the optical property of the phase-change material. The switchable absorber may absorb the respective light when the phase-change material shows the first optical property of the different optical properties, particularly at least 5 times, less than the absorber absorbs the respective light when the phase-change material shows the second optical property of the different optical properties.

The at least two different optical properties may be or may comprise at least two different reflectivity. The term "reflection coefficient" as used herein is a broad term and is to be given its ordinary and customary meaning to a person of ordinary skill in the art and is not to be limited to a special or customized meaning. The term specifically may refer, without limitation, to a degree and/or measure of the capability of a material to reflect light, particularly at a specific wavelength and/or a specific range of wavelengths. The reflectivity, or reflectance for finite optical elements, may be, typically, given relative to the incoming light intensity.

The transfer element may be a switchable reflector, particularly having a switchable reflectivity depending on the phase of the phase-change material. The term "reflector" as used herein is a broad term and is to be given its ordinary and customary meaning to a person of ordinary skill in the art and is not to be limited to a special or customized meaning. The term specifically may refer, without limitation, to an arbitrary optical element having an reflection coefficient of above 5%, 7.5%, 10 %, 12.5% or 15%, particularly in at least one physical state of the phase-change material.

The switchable reflector may reflect at least one of: the illumination light, the detection light depending on the optical property of the phase-change material. The switchable reflector may reflects the respective light when the phase-change material shows the first optical property of the different optical properties, particularly at least 5 times, more than the reflector reflects the respective light when the phase-change material shows the second optical property of the different optical properties.

The at least two different optical properties may be or may comprise at least two different refractive indices. The term "refractive index" as used herein is a broad term and is to be given its ordinary and customary meaning to a person of ordinary skill in the art and is not to be limited to a special or customized meaning. The term specifically may refer, without limitation, to a dimensionless number that gives an indication of the bending ability of a medium to bend light. The refractive index may determine how much a beam path of light is bent and/or refracted, particularly when entering and/or leaving a substance and/or material.

A first refractive index of the two different refractive indices may be, particularly at least 5 times, smaller than a refractive index of the two different refractive indices, particularly for a predetermined wavelength interval.

The transfer element may be an optical lens, particularly having a switchable focal length depending on the optical property of the phase-change material. The term "optical lens" as used herein is a broad term and is to be given its ordinary and customary meaning to a person of ordinary skill in the art and is not to be limited to a special or customized meaning. The term specifically may refer, without limitation, to an at least partially transparent medium configured for bending and/or focusing light rays.

The at least two different optical properties may be or may comprise at least two different focal lengths of the optical lens. The term "focal length" as used herein is a broad term and is to be given its ordinary and customary meaning to a person of ordinary skill in the art and is not to be limited to a special or customized meaning. The term specifically may refer, without limitation, to a degree of how strongly an optical system, specifically an optical lens, converges and/or diverges light rays. Typically, the focal length of an optical system may be calculated by considering and/or evaluating the image formation of an object. The focal length in air may be given by:

$$\frac{1}{f} = (n_{PCM} - 1)\left(\frac{1}{R_1} - \frac{1}{R_2} + \frac{(n_{PCM} - 1)d}{n_{PCM}R_1R_2}\right),$$

with $n_{PCM}$ being the refractive index of the phase-change material, with $R_1R_2$ being the surface radii of the optical lens and with d being the thickness of the optical lens. By changing $n_{PCM}$, particularly due to a change of a phase of the phase-change material, the focal length may, consequently, also change.

The optical lens may have a focal point, particularly defined by the focal length, wherein the object may be intended to be placed in the focal point, e.g. during a measurement process. The focal point may be or may be comprised by an imaging point and/or imaging plane of the detector.

The at least two different optical properties may be or may comprise at least two different absorption coefficients and/or at least two transmission coefficients. The transfer element may be a switchable beam splitter, particularly having a switchable ratio of transmitted light and reflected light depending on the optical property of the phase-change material. The term "beam splitter" as used herein is a broad term and is to be given its ordinary and customary meaning to a person of ordinary skill in the art and is not to be limited to a special or customized meaning. The term specifically may refer, without limitation, to an optical element configured for splitting a beam of light into at least one transmitted beam and at least one reflected beam. The transmitted beam and at least one reflected beam may be directed into differing directions.

As already stated in the above, the spectrometer device comprises at least one switching element, wherein the switching element is configured for setting the phase of the phase-change material in order to adjust the optical properties of the phase-change material.

The term "switching element" as used herein is a broad term and is to be given its ordinary and customary meaning to a person of ordinary skill in the art and is not to be limited to a special or customized meaning. The term specifically may refer, without limitation, to an arbitrary element and/or device configured for actively setting a least one state, particularly by changing at least one state to a differing further state. Thereby, the at least one switching element may actively change the physical state of the phase-change material, particularly for setting the phase of the phase-change material.

The switching element may be or may comprise a further light emitting element, where the further light emitting element is emitting light onto the phase-change material in order to set the temperature of the phase-change material. The further light emitting element may be selected from at least one of

- a thermal radiator;
- a laser, specifically a vertical cavity surface emitting laser (VCSEL), particularly emitting at least one wavelength in the infrared region;
- a light-emitting diode (LED), particularly

  ○ a LED emitting light that is at least partially located in the infrared spectral range and/or

- a LED illuminating a phosphor for light-conversion of light generated by the LED, wherein the luminescent material generates converted light that is at least partly located in the near-infrared spectral range.

The switching element may be or may comprise a heating element that is in thermal contact with the phase-change material in order to set the temperature of the phase-change material.

The heating element may comprises an electrical source that electrically sets the temperature of at least one of:

- a resistor, particularly an electrical resistor, comprised by the heating element,
- a substrate comprised by the heating element, particularly wherein the transfer element, specifically the phase-change material, is arranged on the substrate.

The switching element may be operated in a manner that the temperature of the phase-change material is set in order to adjust the phase, particularly the optical property, of the phase-change material

- over a predetermined period of time, and/or
- by applying a predetermined heating power, particularly onto the phase-change material,

depending on the optical property to be set.

In a further aspect, a mobile communication device is disclosed, wherein the mobile communication device comprises a spectrometer device as disclosed elsewhere herein. For this aspect, reference may be made to any aspect, claim, Embodiment and/or definition disclosed elsewhere herein.

The term "mobile device" as used herein is a broad term and is to be given its ordinary and customary meaning to a person of ordinary skill in the art and is not to be limited to a special or customized meaning. The term specifically may refer, without limitation, to a mobile electronics device more specifically to a mobile communication device, configured for providing access to at least one telecommunication network, such as a cell phone, smart phone or a wearable. The mobile device may be a portable device.

The term "portable" as used herein is a broad term and is to be given its ordinary and customary meaning to a person of ordinary skill in the art and is not to be limited to a special or customized meaning. The term specifically may refer, without limitation, to the property of at least one object of being moved by human force, such as by a single user. Specifically, the object characterized by the term "portable" may have a weight not exceeding 10 kg, specifically not exceeding 5 kg, more specifically not exceeding 1 kg or even not exceeding 500 g. Additionally or alternatively, the dimensions of the object characterized by the term "portable" may be such that the object extends by no more than 0.3 m into any dimension, specifically by no more than 0.2 m into any dimension. The object, specifically, may have a volume of no more than 0.03 m$^3$, specifically of no more than 0.01 m$^3$, more specifically no more than 0.001 m$^3$ or even no more than 500 mm3. In particular, as an example, the portable spectrometer device may have dimensions of e.g. 10 mm by 10 mm by 5 mm. Specifically, the portable spectrometer device may be part of a mobile device or may be attachable to a mobile device, such as a notebook computer, a tablet, a cell phone, such as a smart phone, a smartwatch and/or a wearable computer, also referred to as "wearable", e.g. a body borne computer such as a wrist band or a watch. In particular, the a weight of the spectrometer device, specifically the portable spectrometer device, may be in the range from 1 g to 100 g, more specifically in the range from 1 g to 10 g.

In a further aspect, a method for operating a spectrometer device for obtaining spectroscopic information on at least one object is disclosed, wherein the method comprises using a spectrometer device as disclosed elsewhere herein. For this aspect, reference may be made to any aspect, claim, Embodiment and/or definition disclosed elsewhere herein.

As used herein, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically are used only once when introducing the respective feature or element. In most cases, when referring to the respective feature or element, the expressions "at least one" or "one or more" are not repeated, notwithstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or nonoptional features of the invention.

The spectrometer device, the mobile communication device and the method for operating the spectrometer device according to the present invention, in one or more of the above-mentioned embodiments and/or in one or more of the embodiments described in further detail below, provide a large number of advantages over known devices and methods of similar kind.

In particular, the present invention enables a spectrometer device to comprise an advanced switchable transfer elements that is cost efficient, reliable, compact, flexible and does not require moveable components.

In particular, the present invention enables a reliable calibration. Typically, for an internal calibration of the measurement signal a second light emitting element is required that may emit illumination light along a reference path having a known light throughput. This setup may have the disadvantage of relying on the second light emitting element, which may have slightly different optical properties and/or temperature behavior than the light emitting element that is used in the spectroscopic measurements. Using a switchable transfer elements as disclosed elsewhere herein may overcome this disadvantage, particularly when the transfer element may be configured to act on the optical path of the illumination light of the light emitting element that is used in the spectroscopic measurements in a manner that the light emitting element can be used for calibrating the spectrometer device.

The switchable transfer element as elsewhere disclosed herein comprises a phase-change material, PCM. Depending on the optical properties of the phase change material, the phase change material may be configured for being used in different wavelength ranges, particularly in the near-infra red NIR or in the mid-infra red, MIR. Typically, a method for manufacturing the transfer element may be coating a thin film of the phase change material, such as a film having a thickness of less then 100 $\mu$m, on at least one transparent substrates. Alternatively or in addition, a method for manufacturing the transfer element may be coating a thick film of the phase change material, such as a film having a thickness of 500 $\mu$m, on at least one transparent substrates. This will enable small, cheap and flexible to build switchable optical elements.

The transfer element may be configured for being a switchable absorber having a switchable absorption coefficient, particularly for switching the illumination of an internal reference target by the light emitting element on or off. Alternatively or in addition, the transfer element may be configured for being a switchable beam splitter, particularly for switching the illumination of an internal reference target by the light emitting element on or off. Alternatively or in addition, the transfer element may be configured for being a switchable lens. The focal length of the switchable lens may be switched. The transfer element may be configured for changing the optical path, particularly including changing the external optical path, e.g. for changing the imaging plane.

In order to build a switchable absorber, a phase-change material may be deposited on a substrate. The phase or physical state, of the phase-change material may be controlled by electric and/or thermal stimulation. Therefore, the phase-change material on the substrate may be electrically contacted by at least one metal electrode or may be in thermal contact with a heating resistor. The working principle may be to trigger a phase transition in order to be able to change between an amorphous and a crystalline state. Typical melting temperatures may be between 100°C and 800°C. Typical crystallization temperatures may be between 100°C and 200°C. Due to the differing optical contrasts in the different phases of the material, the coefficient of absorption may be switched.

To be wavelength selective the phase-change material may have an optical dispersion which is not constant. If there is a strong dispersion for one of the phases this optical contrast may be used to generate a wavelength selectivity.

Due to the optical contrast a switchable reflector may be build. An example, the switchable reflector may be an reflector based on total inner reflection having a critical incident angle of $\theta_c = \text{asin}(\frac{n_{medium}}{n_{PCM}})$, with $n_{medium}$ being the refractive index of a medium surrounding the phase-change material, e.g. air and $n_{PCM}$ being the refractive index of the phase-change material. This may lead to larger incident angles being reflected. Typical refractive index contrasts for germanium-antimony- se-

lenium-tellurium,GST, are $\Delta n \approx 1.5$ (*at* 1500nm).

Duo to the optical contrast also switchable lenses may be build. The focal length in air may be given by:

$$\frac{1}{f} = (n_{PCM} - 1)\left(\frac{1}{R_1} - \frac{1}{R_2} + \frac{(n_{PCM} - 1)d}{n_{PCM}R_1R_2}\right),$$

with $n_{PCM}$ being the refractive index of the phase-change material, with $R_1$, $R_2$ being the surface radii of the optical lens and with d being the thickness of the optical lens. By changing $n_{PCM}$ the focal length may, consequently, also change.

Typical phase transitions may be from a crystalline state to an amorphous state: A short but high heat-up of the temperature (e.g. via at least one electric pulse or at least one thermal pulse) may bring the phase-change material above the melting temperature but giving it no time to crystallize.

Typical phase transitions may be from an amorphous state to a crystalline state: A long but less intensive heat-up (e.g. via at least one electric pulse or at least one thermal pulse) may cause the material to anneal giving it enough time to crystallize.

The following phase change materials are of interest: germanium-antimony-telluride, GST, e.g. Ge2Sb2Te5 but also other compositions; silver-indium-antimony-tellurium, AIST; vanadium-dioxide, $VO_2$.

Summarizing and without excluding further possible embodiments, the following embodiments may be envisaged:

Embodiment 1: A spectrometer device for obtaining at least one item of
spectroscopic information on at least one object by spectroscopic measurement, the spectrometer device comprising:

(1) at least one light emitting element, wherein the light emitting element is configured for emitting illumination light for illuminating the at least one object in order to generate detection light from the at least one object;
(2) at least one detector, wherein the detector is configured for generating at least one detector signal when receiving the detection light from the object in order to acquire the item of spectroscopic information;
(3) at least one transfer element, wherein the transfer element comprises a phase-change material having at least two different optical properties depending on the phase of the phase-change material, wherein the transfer element is disposed in at least one of: a beam path of the illumination light and a beam path of the detection light; and
(4) at least one switching element, wherein the switching element is configured for setting the phase of the phase-change material in order to adjust the optical properties of the phase-change material.

Embodiment 2: The spectrometer device according to the preceding Embodiment, wherein the at least two different optical properties are wavelength dependent.

Embodiment 3: The spectrometer device according to any one of the preceding Embodiments, wherein the phase-change material shows a first optical property of the at least two different optical properties, when the phase-change material assumes a first physical state.

Embodiment 4: The spectrometer device according to any one of the preceding Embodiments, the phase-change material shows a second optical property of the at least two different optical properties, when the phase-change material assumes a second physical state.

Embodiment 5: The spectrometer device according to any one of the two preceding Embodiments, wherein the first and the second are two different physical states selected from

- a crystalline state,
- a further crystalline state,
- an amorphous state,
- a liquid state.

Embodiment 6: The spectrometer device according to any one of the preceding Embodiments, wherein the phase-change material is selected from at least one of:

- germanium-antimony-tellurium, GAT;
- silver-indium-antimony-tellurium, AIST;
- vanadium-dioxide, $VO_2$;
- germanium-antimony-selenium-tellurium, GST.

Embodiment 7: The spectrometer device according to any one of the preceding Embodiments, wherein the spectrometer device further comprises a reference target, particularly configured for calibrating the spectrometer device, more particularly wherein the transfer element is arranged in a beam path of the illumination light from the light emitting element to the reference target in a manner that the reference target is illuminated by the illumination light depending on the at least two different optical properties of the transfer element.

Embodiment 8: The spectrometer device according to the preceding Embodiment, wherein, as a result of illuminating the reference target by the illumination light depending on the at least two different optical properties of the transfer element, the intensity of the illumination light impinging on the reference target is different for the at least two different optical properties.

Embodiment 9: The spectrometer device according to any one of the two preceding Embodiments, wherein reference light is generated by the reference target as a result of an interaction of the illumination light with the reference target, wherein the intensity of the reference light impinging on the detector is different for the at least two different optical properties.

Embodiment 10: The spectrometer device according to the preceding Embodiments, wherein the at least two different optical properties are or comprise at least two different absorption coefficients.

Embodiment 11: The spectrometer device according to the preceding Embodiment, wherein the absorption coefficient of the phase-change material being in the first physical state is smaller than the absorption coefficient of the phase-change material being in the second physical state.

Embodiment 12: The spectrometer device according to any one of the preceding Embodiments, wherein the transfer element is a switchable absorber having a switchable absorption coefficient.

Embodiment 13: The spectrometer device according to the preceding Embodiment, wherein the switchable absorber absorbs at least one of: the illumination light, the detection light depending on the optical property of the phase-change material.

Embodiment 14: The spectrometer device according to any one of the two preceding Embodiments, wherein the switchable absorber absorbs the respective light when the phase-change material shows the first optical property of the different optical properties, particularly at least 5 times, less than the absorber absorbs the respective light when the phase-change material shows the second optical property of the different optical properties.

Embodiment 15: The spectrometer device according to any one of the preceding Embodiments, wherein the at least two different optical properties are or comprise at least two different reflection coefficients.

Embodiment 16: The spectrometer device according to any one of the preceding Embodiments, wherein the transfer element is a switchable reflector.

Embodiment 17: The spectrometer device according to the preceding Embodiment, wherein the switchable reflector reflects at least one of: the illumination light, the detection light depending on the optical property of the phase-change material.

Embodiment 18: The spectrometer device according to any one of the two preceding Embodiments, wherein the switchable reflector reflects the respective light when the phase-change material shows the first optical property of the different optical properties, particularly at least 5 times, more than the reflector reflects the respective light when the phase-change material shows the second optical property of the different optical properties.

Embodiment 19: The spectrometer device according to any one of the preceding Embodiments, wherein the at least two different optical properties are or comprise at least two different refractive indices.

Embodiment 20: The spectrometer device according to of the preceding Embodiment, wherein a first refractive index of the two different refractive indices is, particularly at least 5 times, smaller than a refractive index of the two different refractive indices, particularly for a predetermined wavelength interval.

Embodiment 21: The spectrometer device according to any one of the preceding Embodiments, wherein the transfer element is an optical lens having a switchable focal length depending on the optical property of the phase-change material.

Embodiment 22: The spectrometer device according to the preceding Embodiment, wherein the optical lens has a focal point, wherein the object is intended to be placed in the focal point.

Embodiment 23: The spectrometer device according to any one of the two preceding Embodiments, wherein the at least two different optical properties are or comprise at least two different focal lengths of the optical lens.

Embodiment 24: The spectrometer device according to any one of the preceding Embodiments, wherein the at least two different optical properties are or comprise at least two different absorption coefficients and/or at least two transmission coefficients, wherein the transfer element is a switchable beam splitter having a switchable ratio of transmitted light and reflected light depending on the optical property of the phase-change material.

Embodiment 25: The spectrometer device according to any one of the preceding Embodiments, wherein the switching element is or comprises a further light emitting element, where the further light emitting element is emitting light onto the phase-change material in order to set the temperature of the phase-change material.

Embodiment 26: The spectrometer device according to any one of the preceding Embodiments, wherein the switching element is or comprises a heating element that is in thermal contact with the phase-change material in order to set the temperature of the phase-change material.

Embodiment 27: The spectrometer device according to the preceding Embodiment, wherein the heating element comprises an electrical source that electrically sets the temperature of at least one of:

- a resistor comprised by the heating element,
- a substrate comprised by the heating element, particularly wherein the transfer element, specifically the phase-change material, is arranged on the substrate.

Embodiment 28: The spectrometer device according to any one of the preceding Embodiments, wherein the switching element is operated in a manner that the temperature of the phase-change material is set in order to adjust the phase, particularly the optical property, of the phase-change material

- over a predetermined period of time, and/or
- by applying a predetermined heating power, particularly onto the phase-change material,

depending on the optical property to be set.

Embodiment 29: The spectrometer device according to any one of the preceding Embodiments, wherein the spectrometer device comprises at least one evaluation unit configured for evaluating the detector signal in order to obtain the item of spectroscopic information.

Embodiment 30: The spectrometer device according to any one of the preceding Embodiments, wherein the at least one detector comprises a plurality of photosensitive elements sensitive to differing wavelength intervals.

Embodiment 31: The spectrometer device according to any one of the preceding Embodiments, wherein the spectrometer device further comprises at least one wavelength-selective element, wherein the wavelength-selective element is disposed in at least one of:

- a beam path of the illumination light; and
- a beam path of the detection light.

Embodiment 32: The spectrometer device according to the preceding Embodiment, wherein the at least one the wavelength-selective element is configured and/or arranged in a manner that at least two photosensitive elements of the plurality of photosensitive elements are exposed to an individual spectral range of detection light from the object.

Embodiment 33: The spectrometer device according to any one of the preceding Embodiments, wherein the light emitting element is at least one of:

- a thermal radiator;
- a laser, specifically a vertical cavity surface emitting laser (VCSEL), particularly emitting at least one wavelength in the infrared region;
- a light-emitting diode (LED), particularly

  ∘ a LED emitting light that is at least partially located in the infrared spectral range and/or
  ∘ a LED illuminating a phosphor for light-conversion of light generated by the LED, wherein the luminescent material generates converted light that is at least partly located in the near-infrared spectral range.

Embodiment 34: The spectrometer device according to any one of the preceding Embodiments, wherein the light emitting element is emitting infrared radiation.

Embodiment 35: A mobile communication device, wherein the mobile communication device comprises a spectrometer device according to any one of the preceding Embodiments referring to a spectrometer device.

Embodiment 36: A method for operating a spectrometer device for obtaining spectroscopic information on at least one object, wherein the method comprises using a spectrometer device according to any one the preceding Embodiments for obtaining spectroscopic information on at least one object.

Brief description of the figures

Further optional details and features of the invention are evident from the description of preferred exemplary embodiments which follows in conjunction with the dependent claims. In this context, the particular features may be implemented in an isolated fashion or in combination with other features. The invention is not restricted to the exemplary embodiments. The exemplary embodiments are shown schematically in the figures. Identical reference numerals in the individual figures refer to identical elements or elements with identical function, or elements which correspond to one another with regard to their functions.

In the Figures:

Figure 1    shows a graph of the refractive index n of germanium-antimony-tellurium depending on the phase of the germanium-antimony-tellurium;

Figure 2    shows a graph of the absorption coefficient K of germanium-antimony-tellurium depending on the phase of the germanium-antimony-tellurium;

Figure 3    shows a schematic of an exemplary spectrometer device;

Figure 4    shows a schematic of a further exemplary spectrometer device;

Figures 5    shows a schematic of a further exemplary spectrometer device;

Figures 6    shows a schematic of a further exemplary spectrometer device;

Fig. 7a and 7b    shows a schematic of a switchable optical lens; and

Fig. 8a and 8b    shows a schematic of a further switchable optical lens.

Detailed description of the embodiments

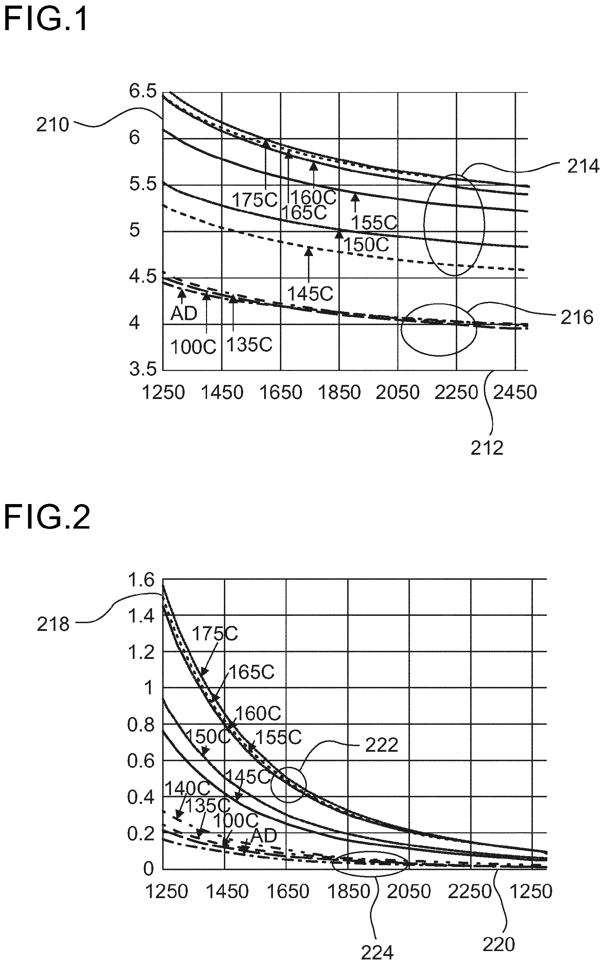

As may be derived from Figures 1 and 2, phase-change materials may have at least two different optical properties depending on the phase, also refer to as physical state, of the phase-change material. Typical phase-change materials are germanium-antimony-tellurium, GAT; and/or silver-indium-antimony-tellurium, AIST; and/or vanadium-dioxide, $VO_2$; and/or germanium-antimony-selenium-tellurium, GST.

Figure 1 shows a specific optical property, namely a refractive index n, on a vertical axis 210 and a wavelength in nanometers on a horizontal axis 212 for a germanium-antimony-tellurium, GST, film on fused silica annealed at 145°C. The phase-change material is set to different temperatures represented by lines. The respective temperature of a line is depicted in Figure 1 itself. It should be noted that the term "AD" refers to ambient temperature. As may be derived from Figure 1, for some temperatures the germanium-antimony-tellurium film may assume a crystalline state, such as cubic state (indicated by the lines within circle 214). As may be further derived from Figure 1, for some further temperatures the GST film may assume an amorphous state (indicated by the lines within circle 216).

Figure 2 shows a further specific optical property, namely an absorption coefficient $\kappa$, on a vertical axis 218 and a wavelength in nanometers on the horizontal axis 220 for a germanium-antimony-tellurium, GST, film on fused silica annealed at 175°C. The phase-change material is set to different temperatures represented by lines. The respective temperature of a line is depicted in Figure 2 itself. Again, it should be noted that the term "AD" refers to ambient temperature. As may be derived from Figure 2, for some temperatures the germanium-antimony-tellurium film may assume a crystalline state, such as cubic state (indicated by the lines within circle 224). As may be further derived from Figure 1, for some further temperatures the GST film may assume an amorphous state,(indicated by the lines within circle 226).

Figure 2 further shows a stronger dispersion of the absorption coefficient $\kappa$ of the germanium-antimony-tellurium film in the cubic states when compared to the amorphous states. Exemplarily, at a wavelength of 1250 nanometers the cubic states have an about seven times higher absorption coefficient $\kappa$. On the other hand, at a wavelength of 2000 nanometers the difference in the absorption coefficients $\kappa$ between the cubic states and the amorphous states almost vanishes.

Consequently, the phase-change material may show a first optical property, when the phase-change material assumes a first physical state. Alternatively or in addition, the phase-change material may show a second optical property, when the phase-change material assumes a second physical state. The optical properties may be different. Further, the different optical properties may be wavelength dependent.

As depicted in Figures 1 and 2, the first and the second physical state may be two different physical states selected from a crystalline state (as depicted in Figures 1 and 2), and an amorphous state (as depicted in Figures 1 and 2). Alternatively or in addition, the first and the second physical state may be two different physical states selected from a further crystalline state, and a liquid state.

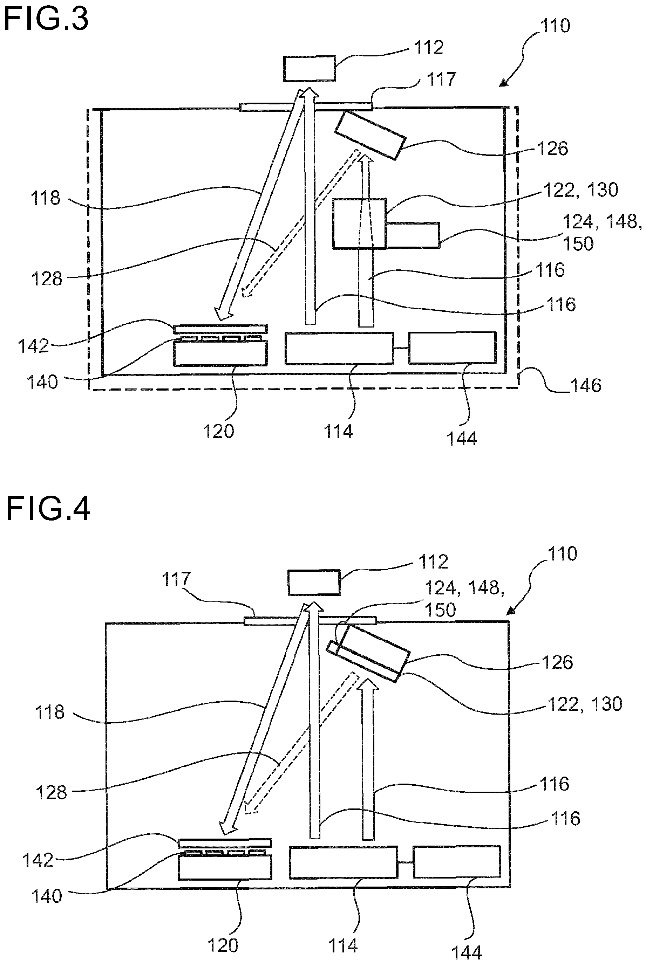

Figure 3 shows a spectrometer device 110 for obtaining at least one item of spectroscopic information on at least one object 112 by spectroscopic measurement. The spectrometer device 110 comprises:

(1) at least one light emitting element 114, wherein the light emitting element 114 is configured for emitting illumination light 116, particularly through a measurement window 117 comprised by the spectrometer device 110, for illuminating the at least one object 112 in order to generate detection light 118 from the at least one object 112;

(2) at least one detector 120, wherein the detector 120 is configured for generating at least one detector 120 signal when receiving the detection light 118, particularly through the measurement window 117, from the object 112 in order to acquire the item of spectroscopic information;

(3) at least one transfer element 122, wherein the transfer element 122 comprises a phase-change material having at least two different optical properties depending on the phase of the phase-change material, wherein the transfer element 122 is disposed in at least one of: a beam path of the illumination light 116 and a beam path of the detection light 118; and

(4) at least one switching element 124, wherein the switching element 124 is configured for setting the phase of the phase-change material in order to adjust the optical properties of the phase-change material.

The spectrometer device 110 further may comprise a reference target 126, particularly configured for calibrating the spectrometer device 110. For being configured for calibrating the spectrometer device 110, the reference target 126 may be deposited in a beam path of the illumination light 116 and generate reference light 128 that is detected by the detector 112.

The transfer element 122 may be arranged and/or deposited in a beam path of the illumination light 116 from the light emitting element 114 to the reference target 126, particularly in a manner that the reference target 126 may be illuminated by the illumination light 116 depending on the at least two different optical properties of the transfer element 122.

Alternatively or in addition, the transfer element 122 may be arranged and/or deposited in a beam path of the reference light 128 from the reference target 126 to the detector 20, particularly in a manner that the detector 120 may be illuminated by the reference light 128 depending on the at least two different optical properties of the transfer element 122.

The switching element 124 may be or may comprise a further light emitting element, where the further light emitting element 150 is emitting light onto the phase-change material in order to set the temperature of the phase-change material. Alternatively or in addition, the switching element 124 may be or may comprise a heating element 148 that is in thermal contact with the phase-change material in order to set the temperature of the phase-change material.

The heating element 148 may comprises a electrical source that electrically sets the temperature of at least one of:

- a resistor comprised by the heating element,
- a substrate comprised by the heating element, particularly wherein the transfer element 122, specifically the phase-change material, is arranged on the substrate.

The switching element 124 may be operated in a manner that the temperature of the phase-change material is set in order to adjust the phase, particularly the optical property, of the phase-change material

- over a predetermined period of time, and/or
- by applying a predetermined heating power

depending on the optical property to be set.

The spectrometer device 110 may comprise at least one evaluation unit 144 configured for evaluating the detector 120 signal in order to obtain the item of spectroscopic information.

The at least one detector 120 may comprise a plurality of photosensitive elements 140 sensitive to differing wavelength intervals.

The spectrometer device 110 further may comprises at least one 142. The wavelength-selective element 142 may be disposed in at least one of:

- a beam path of the illumination light 116; and
- a beam path of the detection light 118.

The at least one the wavelength-selective element 142 may be configured and/or arranged in a manner that at least two photosensitive elements 140 of the plurality of photosensitive elements 140 are exposed to an individual spectral range of detection light 118 from the object 112.

The light emitting element 114 may be at least one of:

- a thermal radiator;
- a laser, specifically a vertical cavity surface emitting laser (VCSEL), particularly emitting at least one wavelength in the infrared region;
- a light-emitting diode (LED), particularly

  ○ a LED emitting light that is at least partially located in the infrared spectral range and/or
  ○ a LED illuminating a phosphor for light-conversion of light generated by the LED, wherein the luminescent material generates converted light that is at least partly located in the near-infrared spectral range.

The light emitting element 114 may be emitting infrared radiation.

As stated already in the context of Figure 1, the at least two different optical properties may be or may comprise at least two different absorption coefficients. The absorption coefficient of the phase-change material being in the first physical state may be smaller than the absorption coefficient of the phase-change material being in the second physical state.

Consequently, the transfer element 122 may be a switchable absorber 130 (as depicted in Figure 3). The switchable absorber 130 may absorb at least one of: the illumination light 116, the detection light 118 depending on the optical property of the phase-change material. The switchable absorber 130 may absorb the respective light when the phase-change material shows the first optical property of the different optical properties, particularly at least 5 times, less than the absorber absorbs the respective light when the phase-change material shows the second optical property of the different optical properties.

In Figure 3, the switchable absorber 130 may arranged and/or deposited in a beam path of the illumination light 116. The illumination light 116 that transmits through the switchable reflector may imping on the reference target 126. Particularly as a result of illuminating the reference target 126 by the illumination light 116 depending on the at least two different optical properties of the transfer element 122, the intensity of the illumination light 116 impinging on the reference target 126 may be different for the at least two different optical properties. Reference light 128 may generated by the reference target 126 as a result of an interaction of the illumination light 116 with the reference target 126. The intensity of the reference light 128 impinging on the detector 120 may be different for the at least two different optical properties (indicated by the dotted arrow 128).

In Figure 4, a further exemplary spectrometer device 110 is shown. Insofar as no deviating information on the reference numbers is provided, reference is made to the preceding explanations. The transfer element 122 depicted in Figure 4 may be also a switchable absorber 130. The switchable absorber 130 may be arranged on the reference target 126 (depicted in Figure 4).

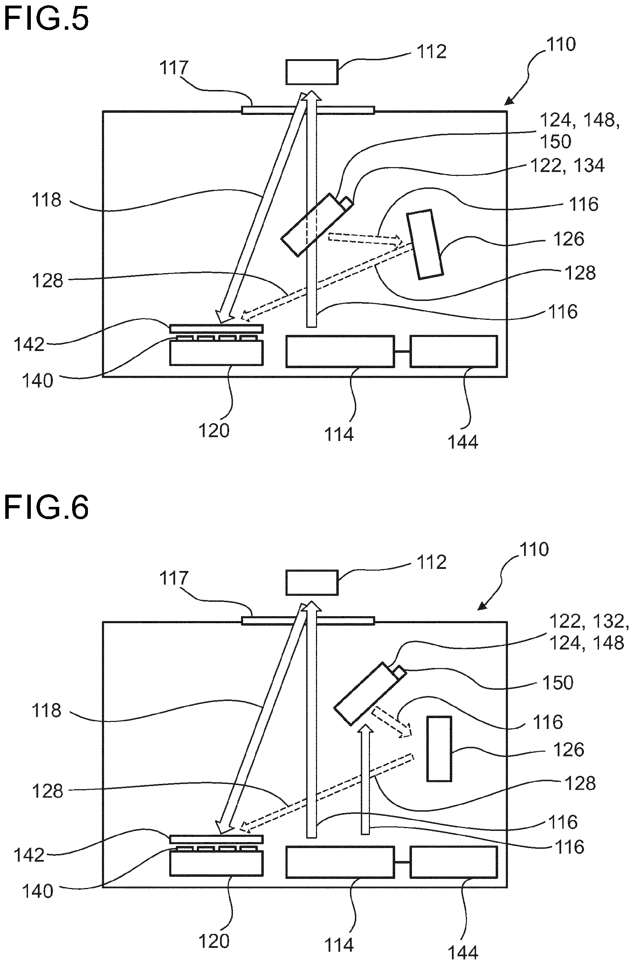

The at least two different optical properties may be or may comprise at least two different absorption coefficients and/or at least two transmission coefficients. In Figure 5, a further exemplary spectrometer device 110 is shown. Insofar as no deviating information on the reference numbers is provided, reference is made to the preceding explanations. As may be derived from Figure 5, the transfer element 122 may be a switchable beam splitter 134, particularly wherein the beam splitter 134 may have a switchable ratio of transmitted light and reflected light depending on the optical property of the phase-change material. The switchable beam splitter 134 may be configured for switching the amount of intensity of the illumination light 116 that is impinging the reference target 126 (indicated by the dotted arrow 116) and/or the object 112. Thereby, the switchable beam splitter 134 may be configured for switching the amount of intensity of the reference light 128 that is impinging the reference target 126 (indicated by the dotted arrow 128).

The at least two different optical properties may be or may comprise at least two different refractive indices, particularly caused by the at least two different absorption coefficients of the phase-change material. A first refractive index of the two different refractive indices may be, particularly at least 5 times, smaller than a refractive index of the two different refractive indices, particularly for a predetermined wavelength interval. Consequently, the at least two different optical properties may be or may comprise at least two different focal lengths 138 of the optical lens 136, particularly since the focal length 138 may be dependent on the refractive index.

In Figure 6, a further exemplary spectrometer device 110 is shown. Insofar as no deviating information on the reference numbers is provided, reference is made to the preceding explanations. As may be derived from Figure 6, the transfer element 122 may be a switchable reflector 132. The switchable reflector may reflect light, such as the illumination light 116, the reference light 128 and/or the detection light 118, when the phase-change material shows the first optical property of the different optical properties, particularly at least 5 times, more than the reflector reflects the respective light when the phase-change material shows the second optical property of the different optical properties. The at least two different optical properties may be or may comprise at least two different reflection coefficients, wherein the switchable reflector 132 may have a switchable reflection coefficient depending on the optical property of the phase-change material.

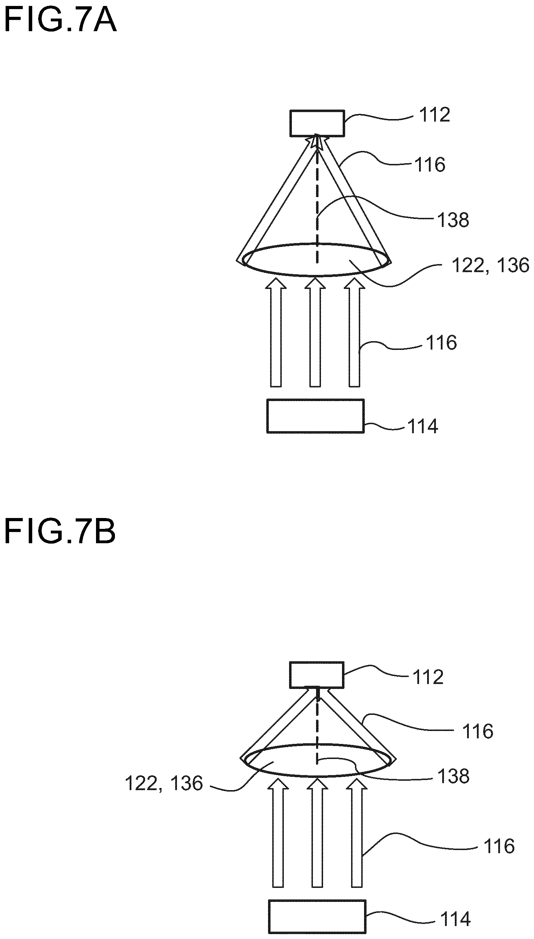

In Figure 7a and 7b, a portion of a further exemplary spectrometer device 110 is shown. Insofar as no deviating information on the reference numbers is provided, reference is made to the preceding explanations. As may be derived from Figure 7a and 7b, the transfer element 122 may be an optical lens 136. The optical lens 136 may have a focal point, wherein the object 112 may be intended to be placed in the focal point. The optical lens 136 may disposed in the beampath of the illumination light 116. Thereby, the optical lens 136 may be configured to focus the illumination light 116 on the object 112, particularly thereby defining a measurement pose for the object 112.

Further in Figures 7a and 7b, exemplarily, an optical lens 136 that may comprise germanium-antimony-tellurium as phase-change material is depicted. If the germanium-antimony-tellurium is in an amorphous state, the optical lens 136 may have a refractive index $n_1$ and a focal length 138 being $f_1$ (depicted in Figure 7a). If the germanium-antimony-tellurium is in a crystalline state, such as a cubic state, the optical lens 136 may have a refractive index $n_2$ and a focal length 138 being $f_2$ (depicted in Figure 6b). The refractive index $n_2$ may be larger than the refractive index $n_1$, consequently, the focal length 138 being $f_2$ may be smaller than the focal length 138 being $f_1$. Thereby, the focal point may be changed

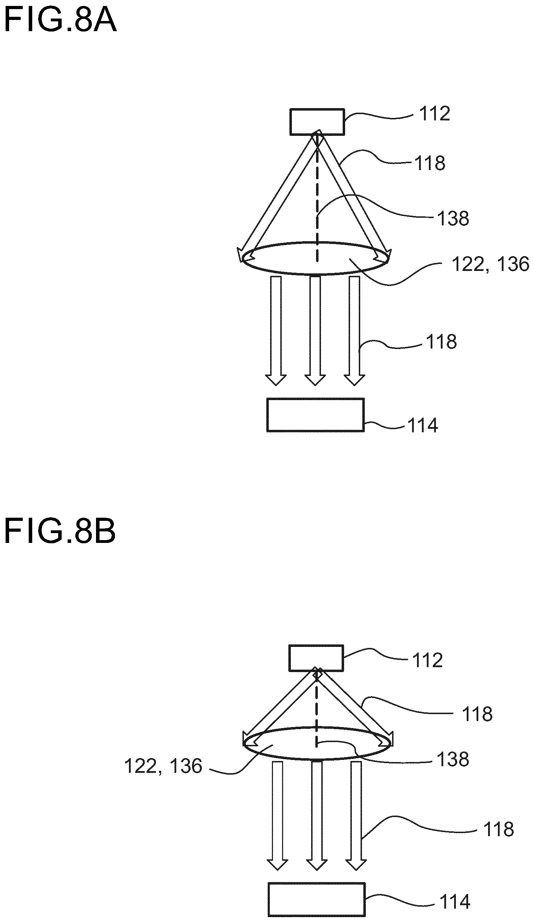

In Figure 8a and 8b, a further exemplary spectrometer device 110 is shown. Insofar as no deviating information on the reference numbers is provided, reference is made to the preceding explanations. As may be derived from Figure 7a and 7b, the transfer element 122 may be an optical lens 136. The optical lens 136 may have a focal point, wherein the object 112 may be intended to be placed in the focal point. Thereby, the optical lens 136 may be configured to collect the detection light 118 from the object 112, particularly thereby defining an imaging plane for the object 112.

Further in Figures 8a and 8b, exemplarily, an optical lens 136 comprising germanium-antimony-tellurium as phase-change material is depicted. If the germanium-antimony-tellurium is in an amorphous state, the optical lens 136 may have a refractive index $n_1$ and a focal length 138 being $f_1$ (depicted in Figure 8a). If the germanium-antimony-tellurium is in a crystalline state, such as a cubic state, the optical lens 136 136 may have a refractive index $n_2$ and a focal length 138 being $f_2$ (depicted in Figure 78). The refractive index $n_2$ may be larger than the refractive index $n_1$, consequently, the focal length 138 being $f_2$ may be smaller than the focal length 138 being $f_1$.

In a further aspect, a mobile communication device 146 is disclosed (depicted in Figure 3), wherein the mobile communication device 146 comprises a spectrometer device 110 as disclosed elsewhere herein.

In a further aspect, a method for operating a spectrometer device 110 for obtaining spectroscopic information on at least one object 112 is disclosed, wherein the method comprises using a spectrometer device 110 as disclosed elsewhere herein.

List of reference numbers

**[0132]**

| | |
|---|---|
| 110 | spectrometer device |
| 112 | object |
| 114 | light emitting element |
| 116 | illumination light |
| 117 | measurement window |
| 118 | detection light |
| 120 | detector |
| 122 | transfer element |
| 124 | switching element |
| 126 | reference target |
| 128 | reference light |
| 130 | switchable absorber |
| 134 | beam splitter |
| 136 | optical lens |
| 138 | focal length |
| 140 | photosensitive element |
| 142 | wavelength-selective element |
| 144 | evaluation unit |
| 146 | mobile communication device |
| 148 | heating element |
| 150 | further light emitting element |
| 210 | vertical axis |
| 212 | horizontal axis |
| 214 | cubic state |
| 216 | amorphous state |
| 218 | vertical axis |
| 220 | horizontal axis |
| 222 | cubic state |
| 224 | amorphous state |

**Claims**

1. A spectrometer device (110) for obtaining at least one item of spectroscopic information on at least one object (112) by spectroscopic measurement, the spectrometer device (110) comprising:

(1) at least one light emitting element (114), wherein the light emitting element (114) is configured for emitting illumination light (116) for illuminating the at least one object (112) in order to generate detection light (118) from the at least one object (112);

(2) at least one detector (120), wherein the detector (120) is configured for generating at least one detector signal when receiving the detection light (118) from the object (112) in order to acquire the item of spectroscopic information;

(3) at least one transfer element (122), wherein the transfer element (122) comprises a phase-change material having at least two different optical properties depending on the phase of the phase-change material, wherein the transfer element (122) is disposed in at least one of: a beam path of the illumination light (116) and a beam path of the detection light (118); and

(4) at least one switching element (124), wherein the switching element (124) is configured for setting the phase of the phase-change material in order to adjust the optical properties of the phase-change material.

2. The spectrometer device (110) according to the preceding claim, wherein the phase-change material shows a first optical property of the at least two different optical properties, when the phase-change material assumes a first physical state, wherein the phase-change material shows a second optical property of the at least two different optical properties, when the phase-change material assumes a second physical state.

3. The spectrometer device (110) according to the preceding claim, wherein the first physical state and the second physical state are two different physical states selected from

   - a crystalline state,
   - a further crystalline state,
   - an amorphous state,
   - a liquid state.

4. The spectrometer device (110) according to any one of the preceding claims, wherein the phase-change material is selected from at least one of:

   - germanium-antimony-tellurium, GAT;
   - silver-indium-antimony-tellurium, AIST;
   - vanadium-dioxide, $VO_2$;
   - germanium-antimony-selenium-tellurium, GST.

5. The spectrometer device (110) according to any one of the preceding claims, wherein the spectrometer device (110) further comprises a reference target (126) configured for calibrating the spectrometer device (110), wherein reference light (128) is generated by the reference target (126) as a result of an interaction of the illumination light (116) with the reference target (126), wherein the intensity of the reference light (128) impinging on the detector (120) is different for the at least two different optical properties.

6. The spectrometer device (110) according to any one of the preceding claims, wherein the at least two different optical properties are or comprise at least two different absorption coefficients, wherein the transfer element (122) is a switchable absorber (130) having a switchable absorption coefficient.

7. The spectrometer device (110) according to any one of the preceding claims, wherein the at least two different optical properties are or comprise at least two different reflection coefficients, wherein the transfer element (122) is a switchable reflector having a switchable reflection coefficient.

8. The spectrometer device (110) according to any one of the preceding claims, wherein the at least two different optical properties are or comprise at least two different refractive indices, wherein the transfer element (122) is an optical lens (136) having a switchable focal length (138).

9. The spectrometer device (110) according to any one of the preceding claims, wherein the at least two different optical properties are or comprise at least two different absorption coefficients and/or at least two transmission coefficients, wherein the transfer element (122) is a switchable beam splitter (134) having a switchable ratio of transmitted light and reflected light depending on the optical property of the phase-change material.

10. The spectrometer device (110) according to any one of the preceding claims, wherein the switching element (124) is or comprises a further light emitting element (150), where the further light emitting element (150) is emitting light onto the phase-change material in order to set a temperature of the phase-change material.

11. The spectrometer device (110) according to any one of the preceding claims, wherein the switching element (124) is or comprises a heating element (148) that is in thermal contact with the phase-change material in order to set the temperature of the phase-change material.

12. The spectrometer device (110) according to the preceding claim, wherein the heating element (148) comprises an electrical source that electrically sets the temperature of at least one of:

- a resistor comprised by the heating element,
- a substrate comprised by the heating element, particularly wherein the transfer element (122), specifically the phase-change material, is arranged on the substrate.

13. The spectrometer device (110) according to any one of the preceding claims, wherein the switching element (124) is operated in a manner that the temperature of the phase-change material is set in order to adjust the phase of the phase-change material

- over a predetermined period of time, and/or
- by applying a predetermined heating power

depending on the optical property to be set.

14. A mobile communication device (146), wherein the mobile communication device (146) comprises a spectrometer device (110) according to any one of the preceding claims referring to a spectrometer device (110).

15. A method for operating a spectrometer device (110) for obtaining spectroscopic information on at least one object (112), wherein the method comprises using a spectrometer device (110) according to any one the preceding claims for obtaining spectroscopic information on at least one object (112).

# FIG.1

# FIG.2

## FIG.3

## FIG.4

## FIG.5

## FIG.6

# FIG.7A

# FIG.7B

## FIG.8A

## FIG.8B

Europäisches
Patentamt

European
Patent Office

Office européen
des brevets

## EUROPEAN SEARCH REPORT

**Application Number**

EP 24 15 8153

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 10 488 253 B2 (DEERE & CO [US]) 26 November 2019 (2019-11-26) * figure 4 * | 1-15 | INV. G01J3/02 G01J3/08 G01J3/28 G01J3/42 G02F1/19 G02F1/29 |
| Y | US 2018/203261 A1 (HOSSEINI PEIMAN [GB] ET AL) 19 July 2018 (2018-07-19) * paragraphs [0021] - [0025], [0048] - [0050] * | 1-7,9-15 | |
| Y | US 2018/284497 A1 (HOSSEINI PEIMAN [GB] ET AL) 4 October 2018 (2018-10-04) * paragraphs [0056] - [0059], [0075] * | 1-7,9-15 | |
| Y | CN 113 917 575 A (JIANGSU YUDI OPTICAL CO LTD; UNIV JIANGSU) 11 January 2022 (2022-01-11) * figure 1 * | 8 | |

**TECHNICAL FIELDS SEARCHED (IPC)**

G01J
G02F

The present search report has been drawn up for all claims

| Place of search | Date of completion of the search | Examiner |
|---|---|---|
| Munich | 27 June 2024 | Rödig, Christoph |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 8153

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2024

| Patent document cited in search report | | Publication date | Patent family member(s) | | Publication date |
|---|---|---|---|---|---|
| US 10488253 | B2 | 26-11-2019 | DE | 102017214352 A1 | 21-02-2019 |
| | | | EP | 3444577 A1 | 20-02-2019 |
| | | | US | 2019056265 A1 | 21-02-2019 |
| | | | US | 2020041340 A1 | 06-02-2020 |
| US 2018203261 | A1 | 19-07-2018 | CN | 107771301 A | 06-03-2018 |
| | | | EP | 3326030 A1 | 30-05-2018 |
| | | | TW | 201726388 A | 01-08-2017 |
| | | | US | 2018203261 A1 | 19-07-2018 |
| | | | WO | 2017013394 A1 | 26-01-2017 |
| US 2018284497 | A1 | 04-10-2018 | CN | 108139618 A | 08-06-2018 |
| | | | CN | 113741064 A | 03-12-2021 |
| | | | EP | 3362849 A1 | 22-08-2018 |
| | | | ES | 2832249 T3 | 09-06-2021 |
| | | | JP | 2018532161 A | 01-11-2018 |
| | | | KR | 20180075542 A | 04-07-2018 |
| | | | TW | 201725428 A | 16-07-2017 |
| | | | US | 2018284497 A1 | 04-10-2018 |
| | | | US | 2020326565 A1 | 15-10-2020 |
| | | | US | 2021389614 A1 | 16-12-2021 |
| | | | WO | 2017064509 A1 | 20-04-2017 |
| CN 113917575 | A | 11-01-2022 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017222618 A